# EUROPÄISCHE PATENTSCHRIFT

(11) **EP 3 126 754 B1**
(45) Veröffentlichungstag und Bekanntmachung des Hinweises auf die Patenterteilung: **11.11.2020**
(21) Anmeldenummer: 15772322.2
(22) Anmeldetag: 01.04.2015
(51) Int. Cl.: H02S 10/00, F24S 23/70, F24S 30/458

(54) **ZENTRALSYMMETRISCHER HELIOSTAT UND SOLARKRAFTWERK MIT EINEM RECEIVER UND EINER VIELZAHL VON HELIOSTATEN**
CENTROSYMMETRIC HELIOSTAT, AND SOLAR POWER PLANT COMPRISING A RECEIVER AND A PLURALITY OF HELIOSTATS
HÉLIOSTAT À SYMÉTRIE CENTRALE ET CENTRALE SOLAIRE COMPORTANT UN RÉCEPTEUR ET UNE PLURALITÉ D'HÉLIOSTATS

(30) Priorität: 01.04.2014 DE 102014206187
(43) Veröffentlichungstag der Anmeldung: 08.02.2017
(73) Patentinhaber: SBP Sonne GmbH, 70197 Stuttgart (DE)
(72) Erfinder: VON REEKEN, Finn, 70176 Stuttgart (DE); BALZ, Markus, 72649 Wolfschlugen (DE)
(74) Vertreter: Pons Ariño, Angel
(86) Internationale Anmeldenummer: PCT/EP2015/057163
(87) Internationale Veröffentlichungsnummer: WO 2015/150445

(56) Entgegenhaltungen:
- WO-A1-2008/092194
- WO-A1-2011/055719
- WO-A1-2012/176650
- DE-A1- 2 834 827
- FR-A- 1 156 873
- JP-A- 2008 298 416
- US-A- 4 209 236
- US-A- 4 459 972
- US-A1- 2010 175 738
- US-B1- 6 336 452

## Beschreibung

Solarkraftwerke mit einem zentralen Receiver, der von einer Vielzahl von Heliostaten umgeben ist, sind seit längerem bekannt, um Solarenergie in konzentrierter Form auf einen flüssigen und/oder dampfförmigen Wärmeträger, wie z.B. eine Salzschmelze oder Wasser bzw. Dampf, zu übertragen und in einer nachgeschalteten Turbine mechanische bzw. elektrische Energie zu gewinnen.

Die Investitionskosten für ein solches Solarkraftwerk sind, verglichen mit einem konventionellen fossil befeuerten Dampfkraftwerk, relativ hoch, u.a. weil eine Vielzahl Heliostaten benötigt werden, die vor Ort gebaut, mit einem geeigneten Fundament im Boden verankert und mit einem geeigneten Verstellantrieb versehen werden müssen.

Ein solcher Heliostat umfasst einen Pylon und eine Tragstruktur für die Spiegelfläche, in der Regel eine verspiegelte Glasfläche, einer gelenkigen Verbindung von Pylon und Tragstruktur mit zwei Freiheitsgraden sowie einem Verstellantrieb, der es erlaubt, die Spiegelfläche so auszurichten, dass die auf der Spiegelfläche auftreffende Solarstrahlung auf den zentral angeordneten Receiver umgelenkt wird.

Die Spiegelfläche eines Heliostaten reicht bei ausgeführten Anlagen von etwa 1 m² bis zu mehr als 150 m². Entsprechend müssen die Pylone, die Tragstrukturen sowie die Gelenke und Antriebe sehr robust und belastbar sein, weil nur dann die Windlasten und das Eigengewicht des Heliostaten sicher aufgenommen und über das Fundament ins Erdreich eingeleitet werden können. Außerdem ist eine steife Konstruktion wichtig, um eine gute Nachführgenauigkeit zu erreichen.

Bei großen Solarkraftwerken werden teilweise über 10.000 Heliostaten benötigt. Infolgedessen ist der Anteil der Heliostaten an der Gesamtinvestition erheblich und jede Optimierung der Heliostaten bringt einen vielfachen wirtschaftlichen Vorteil mit sich. Demzufolge liegt der beanspruchten Erfindung die Aufgabe zugrunde, ein Solarkraftwerk bereitzustellen, dessen Heliostaten unter fertigungstechnischen =Gesichtspunkten aber auch im Hinblick auf geringstmöglichen Materialeinsatz bei gleichzeitig hoher Steifigkeit und optischer Qualität der Spiegelflächen optimiert sind.

US 4209236 A beschreibt einen Heliostaten für ein Solarkraftwerk mit zentralem Receiver, das einen sehr leichten Rahmen aufweist, der ein elastisches reflektierendes Material trägt und aufspannt. Dieser Rahmen umfasst einen, Mechanismus, um selektive Zugspannung, in das stretchbare Material einzuleiten, um die gewünschten optischen Eigenschaften des dehnbaren Materials einzustellen. Dieser Rahmen ist befestigt und wird getragen von einem Rohrgestell, das im Erdboden verankert ist. Der Rahmen wird gesteuert entlang einer vorgegebenen Bahn durch ein ebenfalls gewichtsoptimiertes Antriebssystem, sodass, es sowohl bezüglich der Elevation und des Azimutwinkels dem Lauf der Sonne, nachgeführt werden kann. Infolge dessen reflektiert es wirksam und kontinuierlich die Sonnenstrahlen in eine Fokuszone, wo der zentrale Receiver des Kraftwerks installiert ist. Dieser solare Receiver ist Teil eines Solarenergienutzungssystems, wie zum Beispiel eines solargetriebenen Kraftwerks. Der Rahmen kann ein eingebautes System zum Testen der optischen Eigenschaften des Reflektors, der durch die erwähnte dehnbare reflektierbare und reflektierende Folie das dehnbare und reflektierende Material gebildet wird. Die bevorzugte geometrische Konfiguration des Reflektors ist ein Achteck. Verschiedene Ausführungsformen von Mitteln zum Spannen des elastischen und reflektierenden Materials und zum Positionieren des Reflektors zum Erreichen einer gewünschten optischen Charakteristik des Reflektors werden beschrieben.

Diese Aufgabe wird erfindungsgemäß gelöst bei einem Heliostat für ein Solarkraftwerk mit einem zentralen Receiver, gemäß Anspruch 1. Der Heliostat umfasst einen Pylon, eine relativ zu dem Pylon drehbar und/oder schwenkbare Tragstruktur für eine Spiegelfläche und mindestens einen Stellantrieb, wobei die Spiegelfläche axialsymmetrisch ist und mindestens fünf Ecken aufweist.

In anderen Worten: Die Spiegelfläche ist als regelmäßiges Polygon mit fünf oder mehr Ecken ausgebildet und dadurch der Kreisform stärker angenähert als dies bei herkömmlichen quadratischen oder rechteckigen Spiegelflächen der Fall ist. Dadurch wird die gegenseitige Verschattung benachbarter Spiegelflächen deutlich reduziert und gleichzeitig kann bei Heliostaten mit nicht horizontaler Primärachse die Länge der Pylone reduziert werden, weil - gleiche Spiegelfläche vorausgesetzt - der maximale Abstand einer Ecke des Polygons zum Mittelpunkt der Spiegelfläche reduziert wird.

Außerdem bietet eine ebenfalls zentralsymmetrische Tragstruktur mit einer Nabe, an der radial nach außen gerichtete Tragarme angeordnet sind, weitere Vorteile hinsichtlich Materialeinsatz und Baukosten. Durch diese radiale Struktur der Tragarme lässt sich bei gleicher Steifigkeit der Materialeinsatz verringern und es lassen sich Segmente der Spiegelflächen mit einer dreieckigen Grundform herstellen, die ohne Verschnitt aus Flachglas-Rohmaterial herausgeschnitten werden können.

Bei der erfindungsgemäßem Struktur sind alle großen Massen (Nabe, die biegesteifen radial inneren Bereich der Tragarme sowie der zweite Linearantrieb) zentral angeordnet, so dass die Eigenfrequenz der Struktur hoch ist und in Folge dessen die Schwingungsanregung durch Wind während des Betriebs klein ist. Dadurch wird das reflektierte Sonnenlicht auch bei Wind sehr genau auf den Receiver umgelenkt. Dies ist bei herkömmlichen Heliostaten nicht der Fall.

In der Summe führen diese erfindungsgemäßen Merkmale somit zu einer verbesserten Effizienz bzw. einer erhöhten Leistung der Spiegelfläche aufgrund der geringeren Abschattung, geringerem Materialeinsatz und gleichzeitig geringeren Belastungen des Heliostaten durch Eigengewicht und Windlasten, was wiederum eine Reduktion des eingesetzten Materials ermöglicht. Somit sind die erfindungsgemäßen Heliostaten sehr wirtschaftlich.

Es hat sich als vorteilhaft erwiesen, wenn die Tragstruktur eine erste Gruppe von Tragarme umfasst, welche die Nabe mit den Eckpunkten der Spiegelfläche verbindet. Zwischen diesen zwei benachbarten Tragarmen der ersten Gruppe sind in weiterer vorteilhafter Ausgestaltung der Erfindung Tragarme einer zweiten Gruppe in der Winkelhalbierenden zwischen zwei benachbarten Tragarmen der ersten Gruppe angeordnet. Die Tragarme der ersten Gruppe sind länger als die Tragarme der zweiten Gruppe; beide haben die Aufgabe, die Spiegelfläche, die aus mehreren Segmenten von dreieckigen beschichteten Glasscheiben zusammengesetzt wird, zu unterstützen und eine gezielte geringe Verformung der Spiegelfläche aufzuprägen, so dass die Spiegelfläche Wirkung hat.

Zwischen benachbarten Tragarmen sind mehrere in unterschiedlichen radialen Abständen angeordnete Pfetten vorgesehen, die eine weitere Versteifung der Tragstruktur bewirken. In der Regel kreuzen die Pfetten die kurzen Tragarme unter einem rechten Winkel. Auf den Pfetten sind Befestigungselemente angeordnet, die in der Höhe einstellbar sind und an ihrem einen Ende mit der Rückseite der Spiegelfläche direkt oder indirekt verklebt werden. Auf diese Weise wird die Spiegelfläche mit der Tragstruktur verbunden und sicher gehalten.

Um Fertigungs- und Montagetoleranzen der Tragstruktur ausgleichen zu können, sind die Befestigungselemente bevorzugt durch ein Gewinde mit den Pfetten verbunden, so dass sich durch Drehen der Befestigungselemente die Höhe des Befestigungspunkts feinfühlig und genau einstellen lässt. Alternativ ist es auch möglich, die Befestigungselemente an den Pfetten festzukleben. Dabei sollte der Klebstoff dick genug aufgetragen werden, so dass bei der Positionierung der Elemente der Spiegelfläche relativ zu den Tragarmen die auftretenden Toleranzen ausgleichen kann.

Dadurch ist es auch ohne Weiteres möglich, den dreieckigen Segmenten der Spiegelfläche eine gewisse Krümmung aufzuprägen, so dass die Spiegelfläche das auftreffende Sonnenlicht in einen Brennpunkt konzentriert, wobei der Brennpunkt etwa dort liegt, wo der Receiver seinen Standort hat.

Alternativ können die Spiegelflächen auch zuerst in die gewünschte Position und Form gebracht und dann mit der Struktur verklebt werden.

Um die Ausrichtung der Spiegelfläche so steuern zu können, dass das auf der Spiegelfläche auftreffende Sonnenlicht auf den Receiver umgelenkt wird, ist vorgesehen, dass die Nabe und der Pylon über ein Gelenk mit zwei Drehachsen, die einen Winkel zwischen 60° und 90° (orthogonal) einschließen, gekoppelt sind und dass eine erste Drehachse des Gelenks einen ersten Winkel α größer 0° mit einer horizontalen Ebene einschließt.

Der Winkel α ist nicht bei jedem Heliostat des Solarkraftwerks gleich, sondern hängt von der Position des Heliostaten relativ zum Receiver ab.

Der Winkel α stellt somit gewissermaßen eine Art ortsabhängiger Voreinstellung der Spiegelfläche dar, so dass für die Nachführung der Spiegelfläche entsprechend der Tageszeit und der Jahreszeit ein reduzierter Verstellbereich um die erste Drehachse ausreichend ist. Dies hat zur Folge, dass die Gelenke und der Stellantrieb einfacher und kostengünstiger ausgeführt werden können und die Investitionskosten erheblich reduziert werden.

Da sich die Heliostaten eines Solarkraftwerks nur bezüglich der Winkels alpha voneinander unterschieden, ist trotzdem eine kostengünstige Serienfertigung der Pylonen möglich. Bei konkret geplanten Solarkraftwerken hat es sich als ausreichend erwiesen, wenn insgesamt sieben verschiedene Typen von Pylonen hergestellt werden, wobei sich die Pylonen lediglich bezüglich des genannten Winkels alpha der ersten Drehachse voneinander unterscheiden. Diese kleine konstruktive Änderung führt nicht zu nennenswert erhöhten Produktionskosten.

Das Gelenk zwischen Nabe und Pylon weist eine zweite Drehachse auf, die orthogonal zur ersten Drehachse verläuft. Mit Hilfe der zwei Drehachsen ist es möglich, die Spiegelfläche so einzustellen, dass das auftreffende Sonnenlicht in Richtung des Receivers umgelenkt wird. Gleichzeitig ist es auch möglich, die Flächennormale der Spiegelfläche aus dem Receiver herauszuschwenken und die gesamte Spiegelfläche in eine Ruheposition und bei Bedarf auch eine Reinigungsposition zu schwenken.

Zwischen dem Pylon und der Tragstruktur ist ein erster Linearantrieb vorgesehen. Dieser Linearantrieb verschwenkt die Spiegelfläche um die erste Drehachse. Linearantriebe sind relativ kostengünstig, weil ihre Herstellung einfach ist. Dabei sind prinzipiell alle am Markt verfügbaren Linearantriebe geeignet. In vielen Fällen haben sich Gewindespindeln, beispielweise mit einem Trapezgewinde oder Kugelgewindespindeln, als leistungsfähig und ausreichend präzise erwiesen.

Um die Genauigkeit, mit der die Spiegelfläche verschwenkt wird, zu erhöhen, ist es vorteilhaft, wenn das Eigengewicht der Tragstruktur den Linearantrieb auf Zug beansprucht. Dann nämlich werden Fertigungstoleranzen und Spiel in dem Linearantrieb bzw. den Gelenken und Lagern mit deren Hilfe der Linearantrieb einerseits an den Pylon und andererseits an der Tragstruktur befestigt ist, immer ausgeglichen. Selbst zunehmendes Spiel aufgrund von Verschleiß während der Betriebsdauer des Heliostaten kann von der Steuerung kompensiert werden und wirkt sich dann nicht negativ auf die Genauigkeit der Ausrichtung der Spiegelfläche aus.

Eine weitere konstruktive Vereinfachung des Gelenks sieht vor, dass das Gelenk ein Zwischenstück umfasst und dass das Zwischenstück eine erste und eine zweite Lagergasse aufweist, die voneinander beabstandet sind und rechtwinklig zueinander verlaufen. Dadurch ist es möglich, auf einfache Weise eine Lagerung um die erste Drehachse und eine zweite Drehachse zu realisieren. Die Stellbewegung um die zweite Drehachse wird erfindungsgemäß durch einen zweiten Linearantrieb realisiert, der einenends an dem Zwischenstück und anderenends an der Nabe der Tragstruktur befestigt ist. Auch hier gilt wieder, dass aufgrund des Eigengewichts der Tragstruktur der zweite Linearantrieb vorzugsweise permanent unter Zugspannung steht, so dass Spiel keine negativen Auswirkungen auf die Positioniergenauigkeit der Spiegelfläche hat. Alternativ könnte ein Sensor im Linearantrieb auch der Steuerung die Information liefern, ob gerade Zug- oder Druckbelastung herrscht. Dann kann die Steuerung das Spiel im Linearantrieb bzw. den Gelenken kompensieren.

Es hat sich als ausreichend erwiesen, wenn der Verstellbereich um die erste Drehachse und/oder die zweite Drehachse weniger als 110°, bevorzugt weniger als 105° und in vielen Fällen auch weniger als 100°, beträgt, was den effizienten Einsatz von Linearantrieben ermöglicht.

In diesem Winkelbereich ist es gut möglich, mit einem Linearantrieb sowohl die Mittellage als auch die extremen Positionen ausreichend genau anzusteuern und die Tragstruktur in der angesteuerten Position ausreichend genau zu halten.

Wenn der Verstellwinkel deutlich über 110° hinaus vergrößert wird, dann treten zumindest in den extremen Positionen sehr hohe Kräfte auf und die Konstruktion wird relativ nachgiebig und empfindlich gegenüber Windlasten.

In weiterer vorteilhafter Ausgestaltung der Erfindung sind die Tragarme als Fachwerk ausgebildet und die Segmente der Spiegelflächen sind direkt oder mittelbar, insbesondere über die bereits erwähnten Pfetten und Befestigungselemente, mit den Tragarmen verbunden. Auf diese Weise werden die Segmente der Spiegelflächen an vielen Punkten gestützt, so dass selbst nur vier Millimeter dickes Flachglas den im Betrieb auftretenden Windlasten Stand hält. Außerdem ist es möglich, den Segmenten der Spiegelflächen eine (konkave) Krümmung aufzuprägen, so dass die Spiegelfläche eine konzentrierende optische Eigenschaft erhält.

Alternativ ist es auch möglich, die Tragarme aus Blech durch einen Umformprozess herzustellen. Der Querschnitt dieser Tragarme ist U-förmig und ändert mit zunehmendem Abstand von der Nabe dahingehend, dass der Querschnitt breiter und dafür weniger hoch wird. Gleichzeitig wird an dem Rand eine Abkantung hergestellt, die bestens geeignet ist, um die Spiegelfläche mit dem Tragarm zu verkleben. Durch die lange Klebelinie ergibt sich nach dem Verkleben des Glases ein geschlossenes rechteckiges Profil, das einerseits aus dem Segment der Spiegelfläche und andererseits aus einem oder zwei Tragarmen, die nebeneinander angeordnet sind, gebildet wird. Jedes dieser kastenförmigen Profile ist sehr biegesteif und torsionsfest, so dass eine weitere Reduktion des Materialeinsatzes bei gesteigerter Festigkeit erreicht werden kann.

Die einzelnen Segmente können vorzugsweise zu einem geschlossenen Schalentragwerk verbunden werden.

Um diese kastenförmigen Profile bzw. diese U-förmig aus Blech gefertigten Tragarme mit der Nabe bestmöglich verbinden zu können, sind am oberen Ende der Nabe und am unteren Ende der Nabe entsprechend geformte Laschen ausgebildet. An diese Laschen werden die Tragarme vorzugsweise durch Blindniete befestigt. Dabei können, wie auch bei der Montage der fachwerkartigen Tragstruktur, Fertigungsungenauigkeiten dadurch ausgeglichen werden, dass die Nabe und die Tragarme auf einer Helling positioniert werden, und in dieser Position die Tragarme mit dem aufgeklebten Segment der Spiegelfläche mit der Nabe vernietet werden.

Es hat sich als vorteilhaft erwiesen, wenn die Nabe als kegelstumpfförmiger Körper ausgebildet ist, dessen eines Ende einen größeren Durchmesser und dessen anderes Ende einen kleinen Durchmesser aufweist, wobei mindestens an dem Ende mit größerem Durchmesser mehrere radial angeordnete Befestigungspunkte bzw. Befestigungslaschen vorgesehen sind. Das Ende mit dem kleineren Durchmesser kann als Befestigungsflansch ausgebildet sein oder ebenfalls mehrere radial angeordnete Befestigungslaschen aufweisen.

In diesem Fall ist es möglich, dass die fachwerkartigen Tragarme an dem Ende mit den radial angeordneten Befestigungslaschen in tangentialer Richtung verschraubt werden, weil der Abstand zwischen den Befestigungslaschen ausreichend groß ist, um ein Werkzeug zum Anziehen der Befestigungsschrauben anzusetzen. An dem Ende der Nabe mit dem kleineren Durchmesser ist dieser Platz nicht vorhanden, so dass die Befestigungsschraube achsparallel durch den Flansch und entsprechende Befestigungsbohrungen der Tragarme gesteckt und angezogen werden.

Bei der Nabe, die mit den aus Blech hergestellten Tragarmen verbunden wird, sind an beiden Enden der kegelstumpfförmigen Nabe Laschen ausgebildet, die radial angeordnet sind. Die aus Blech geformten Tragarme werden bevorzugt durch Blindnieten mit den Laschen verbunden.

Die eingangs genannte Aufgabe wird auch gelöst durch ein Solarkraftwerk umfassend einen Receiver und eine Vielzahl von Heliostaten, wobei die Heliostaten elektrische Verstellantriebe aufweisen und wobei mehreren Heliostaten eine Photovoltaikeinheit, ein Pufferspeicher für elektrische Energie und/oder ein Steuergerät zugeordnet ist. Dann können ein Steuergerät, eine Photovoltaikeinheit und ein Pufferspeicher eine Mehrzahl, beispielsweise acht bis zwanzig, Heliostaten steuern. Dadurch werden die Kosten für die Photovoltaikeinheiten, den Pufferspeicher und das Steuergerät bezogen auf einen Heliostat reduziert, weil die Auslastung beispielsweise des Steuergeräts vergleichmäßigt wird und auch die anderen Komponenten regelmäßig genutzt und besser ausgelastet werden.

Gleichzeitig sind die räumlichen Abstände zwischen dem Steuergerät und den Antrieben der verschiedenen Heliostaten noch relativ kurz, so dass auch der Verkabelungsaufwand noch überschaubar ist.

Es hat sich weiter als vorteilhaft erwiesen, wenn verschiedene Gruppen untereinander baugleicher Heliostaten um den Receiver herum angeordnet werden. Dabei unterscheiden sich die Heliostaten zweier Gruppen lediglich bezüglich des Winkels alpha, um den die erste Drehachse zur Horizontalen geneigt ist. In der Praxis hat es sich als ausreichend erwiesen, wenn sieben Gruppen von Heliostaten hergestellt und um den Receiver herum angeordnet werden. Dadurch ist es möglich, die erfindungsgemäßen Vorteile der Heliostaten mit Linearantrieb zu realisieren.

Weitere Vorteile und vorteilhafte Ausgestaltungen der Erfindung sind der nachfolgenden Zeichnung und deren Beschreibung entnehmbar. Alle in der Zeichnung, deren Beschreibung und den Patentansprüchen beschriebenen Merkmale können einzeln als auch in beliebiger Kombination miteinander erfindungswesentlich sein.

Es zeigen:
Figur 1 eine Draufsicht auf ein erstes Ausführungsbeispiel einer erfindungsgemäßen axialsymmetrischen Spiegelfläche mit entsprechender Tragstruktur;
Figur 2 eine Seitenansicht einer Nabe mit einem als Fachwerk ausgebildeten Tragarm;
Figur 3 eine Nabe ohne Tragarm;
Figur 4 zeigt wie aus einer handelsüblichen Flachglasplatte die Segmente der Spiegelflächen ohne Verschnitt herausgeschnitten werden;
Figur 5 zeigt die Verschraubung von Pfetten mit den längeren Tragarmen sowie die Befestigung der Spiegelfläche mit Hilfe von in der Höhe einstellbaren Befestigungselementen an den Pfetten;
Figur 6 zeigt die Befestigung der Pfetten an den kürzeren Tragarmen;
Figur 7 zeigt in zwei verschiedenen Ansichten einen erfindungsgemäßen Pylon und eine erfindungsgemäße Nabe, die über ein Gelenk mit zwei Drehachsen und zwei Linearantrieben miteinander verbunden sind;
Figur 8 zeigt die gleiche Anordnung wie in Figur 7 in einer Isometrie;
Figur 9 zeigt in einem Ausschnitt die Verbindung von Tragstruktur und Pylon mit Hilfe eines Gelenks und zweier Linearantriebe;
Fig. 10 - Fig. 13 zeigen ein zweites Ausführungsbeispiel einer erfindungsgemäßen Tragstruktur;
Figur 14 zeigt die Verbindung der aus Blech gefertigten Umformtragarme mit einer entsprechend geformten Nabe durch Blindniete;
Figur 15 zeigt die Versorgung einer Gruppe von Heliostaten mit elektrischer Energie und deren zentrale Ansteuerung durch ein gemeinsames Steuergerät
Figuren 16 und 17 ein weiteres Ausführungsbeispiel einer Nabe und
Figuren 18 und 19 eines zwischen Pylon und Nabe angeordnetes Zwischenstück.

### Beschreibung der Ausführungsbeispiele

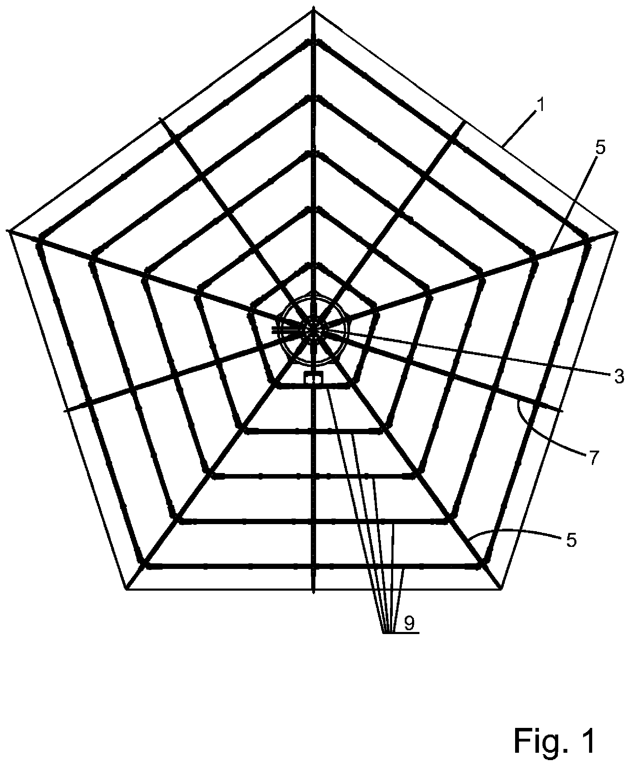

Die Figur 1 zeigt eine Ansicht von unten auf ein erstes Ausführungsbeispiel eines erfindungsgemäßen Heliostaten, wobei die als regelmäßiges Polygon ausgeführte Spiegelfläche mit dem Bezugszeichen 1 versehen wurde.

Die Tragstruktur, welche die Spiegelfläche 1 trägt, umfasst eine zentrale Nabe 3, an der radial zwei Gruppen von Tragarmen 5 und 7 angeschraubt oder auf andere Weise befestigt sind. Die erste Gruppe von Tragarmen 5 reichen bis zu den Ecken der Spiegelfläche 1 und die zwischen den Tragarmen 5 angeordneten etwas kürzere Tragarme 7 sind in der Winkelhabierenden zwischen zwei Tragarmen 5 angeordnet. Aus Gründen der Übersichtlichkeit sind nicht alle baugleichen Teile in den Figuren mit Bezugszeichen versehen.

Zwischen den Tragarmen 5 sind auf verschiedene Radien Pfetten 9 angeordnet, welche die sich von einem Tragarm 5 zum benachbarten Tragarm 5 erstrecken und dabei in ihrer Mitte mit den kürzeren Tragarmen 7 verschraubt oder vernietet sind.

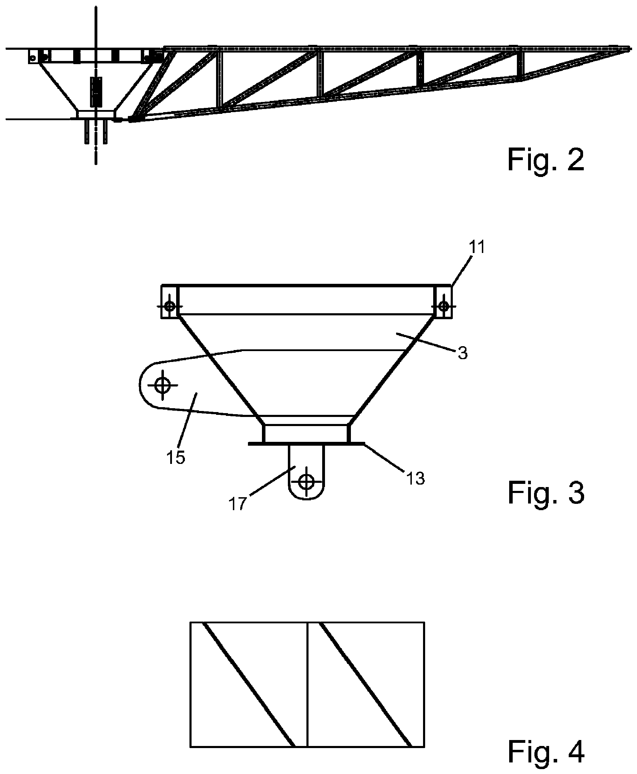

Die konstruktiven Details dieser Konstruktion werden nachfolgend im Zusammenhang mit den Figuren 2 bis 9 näher erläutert.

In der Figur 3 ist eine Nabe 3 in einer Seitenansicht dargestellt. Dabei wird deutlich, dass die Nabe 3 kegelstumpfförmig ausgebildet ist und das in der Figur 3 obere Ende der Nabe 3 einen größeren Durchmesser aufweist als das untere Ende der Nabe 3. An dem oberen Ende sind mehrere radial und parallel zur Längsachse der Nabe 3 ausgerichtete Befestigungslaschen 11 vorgesehen, die jeweils eine Befestigungsbohrung (ohne Bezugszeichen) aufweisen.

Am unteren Ende der Nabe 3 ist ein Flansch 13 ausgebildet, der ebenfalls Befestigungsbohrungen aufweist, die parallel zur Längsachse der Nabe 3 ausgerichtet und daher in Figur 3 nicht sichtbar sind. Die Befestigungsbohrungen in den Befestigungslaschen 11 und in dem Flansch 13 dienen dazu, die Tragarme 5 und 7 mit der Nabe 3 verschrauben zu können.

Wie sich aus der Figur 3 gut erkennen lässt, sind an der Nabe 3 ein Anlenkpunkt 15 für einen zweiten Linearantrieb 29 (nicht dargestellt) und eine Lasche 17 angeordnet. Die Lasche 17 ist Teil eines Gelenks mit der die Nabe 3 an einem Pylon befestigt ist. Der Anlenkpunkt 15 dient dazu, einen Linearantrieb gelenkig mit der Nabe 3 zu verbinden, um die Verstellung bzw. das Verschwenken der Nabe 3 um eine zweite Drehachse, die der Längsachse der Lagerbohrung in der Lasche 17 entspricht, zu ermöglichen.

Die Spiegelfläche 1 ist aus mehreren Segmenten hergestellt, die angenähert die Form eines rechtwinkligen Dreiecks haben. In der Figur 4 ist der Zuschnitt dieser Segmente aus einer handelsüblichen Glasplatte, die in Abmessungen von 6 Metern mal 3,21 Metern hergestellt wird, zu sehen. Dabei wird deutlich, dass kein Verschnitt anfällt, so dass mit minimalem Materialeinsatz eine Spiegelfläche mit maximaler Fläche gebildet wird.

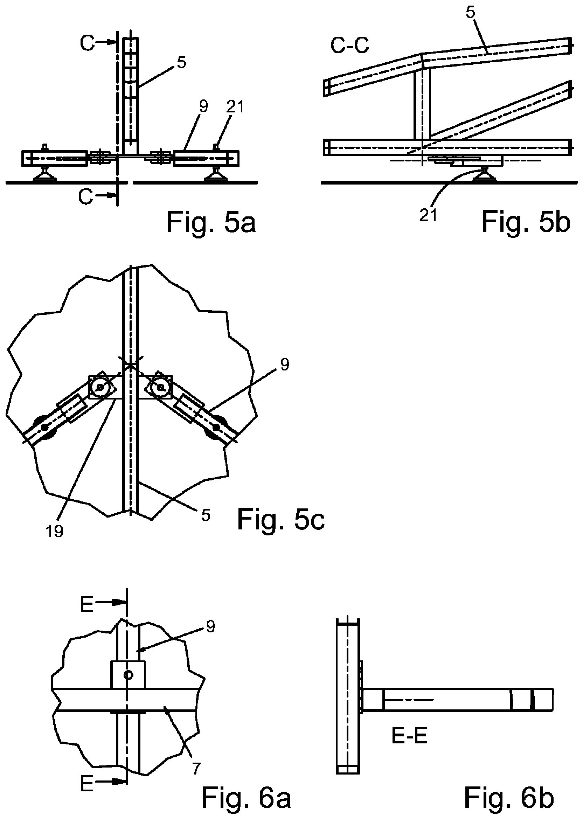

In der Figur 5 wird in verschiedenen Ansichten die Schraubverbindung dargestellt, wie die Pfetten 7 an angeschweißten Laschen 19 an den Tragarmen 5 verschraubt werden. Die Laschen 19 sind nur in der Draufsicht im unteren Ende der Figur 5c mit Bezugszeichen versehen.

Damit Fertigungsungenauigkeiten ausgeglichen werden können, weisen die Laschen 19 Durchgangsbohrungen auf, deren Durchmesser deutlich größer ist als der Durchmesser der eingesetzten Befestigungsschrauben. Dadurch ist es möglich, die erwähnten Fertigungsungenauigkeiten auszugleichen und nachdem die Befestigungsschrauben angezogen wurden, mit Hilfe ausreichend großer und dicker Unterlegscheiben die gesamte Struktur zu stabilisieren.

An den Pfetten 9 sind bei diesem Ausführungsbeispiel Gewindehülsen vorgesehen, in die Befestigungselemente 21 eingedreht werden. Die Befestigungselemente 21 weisen an dem in Figur 5a unteren Ende einen Fuß (ohne Bezugszeichen) auf. Dieser Fuß ist die Kontaktstelle zu der Spiegelfläche 1. In anderen Worten: Die Segmente der Spiegelfläche 1 werden mit den Füßen der Befestigungselemente 21 verklebt. Dadurch, dass die Füße der Befestigungselemente ähnlich einem Kugelgelenk an dem eigentlichen Befestigungselement 21 angeordnet sind, ist es möglich, das Befestigungselement in der Gewindehülse der Pfette 9 zu drehen und auf diese Weise die Spiegelfläche 1 in ihrer Höhe exakt einzustellen. Durch eine Kontermutter oder eine andere Art der Schraubensicherung können nach erfolgter Einstellung die Befestigungselemente 21 dauerhaft gesichert werden und somit die optische Qualität der Spiegelfläche 1 über lange Jahre gewährleistet werden.

Alternativ kann auch eine Klebeverbindung zwischen der Spiegelfläche und der Tragstruktur realisiert werden.

In der Figur 6 ist die Verbindung einer Pfette 9 mit einem der kürzeren Tragarme 7 durch eine Nietverbindung angedeutet.

Selbstverständlich ist es auch möglich, die Pfette 9 mit den Tragarmen 5 und 7 auch auf andere Weise zu verbinden.

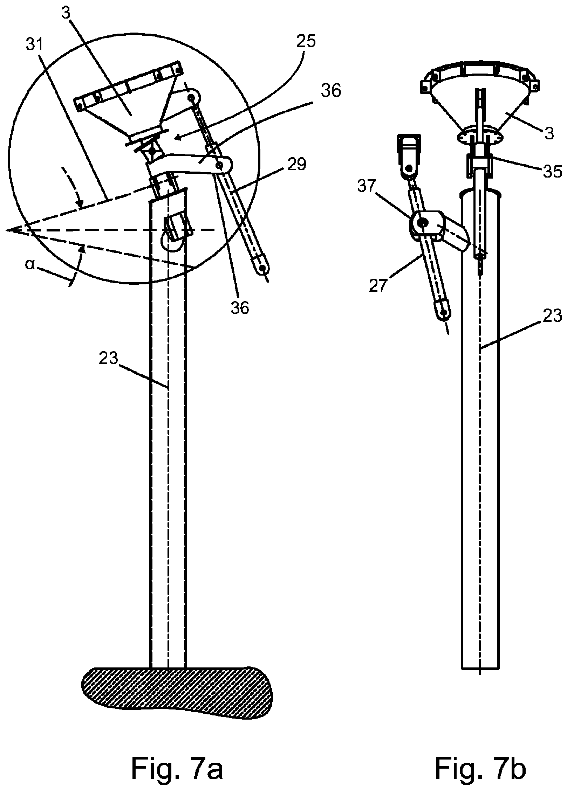

In der Figur 7 sind ein Pylon 23, ein Gelenk 25 und die Nabe 3 sowie die zugehörigen Linearantriebe 27 und 29 in einer Seitenansicht und in einer Isometrie dargestellt. Der Pylon 23 ist ein Rohr mit kreisrundem oder quadratischem Querschnitt aus Stahl, das an seinem oberen Ende schräg abgeschnitten ist und dort eine Lagerung aufweist, deren Drehachse, nachfolgend als erste Drehachse 31 bezeichnet, einen Winkel α mit einer Horizontalen einschließt. Durch diese schräg gestellte erste Drehachse 31 ist es möglich, den für den betrieb des Heliostaten erforderlichen Verstellwinkel um die erste Drehachse 31 auf einen Wert unter 110° und in vielen Fällen sogar auf einen Wert unter 105° zu begrenzen.

Dieser Verstellwinkel kann mit einem ersten Linearantrieb 27 ausreichend präzise und mit ausreichender Steifigkeit realisiert werden. Die Tatsache, dass der Zusammenhang zwischen Verstellweg des ersten Linearantriebs 27 und der daraus resultierenden Winkeländerung der Nabe 3 nicht linear ist, stellt für die Steuerung kein Problem dar, weil dieser Zusammenhang beispielsweise in Form einer Kennlinie im Steuergerät hinterlegt werden kann.

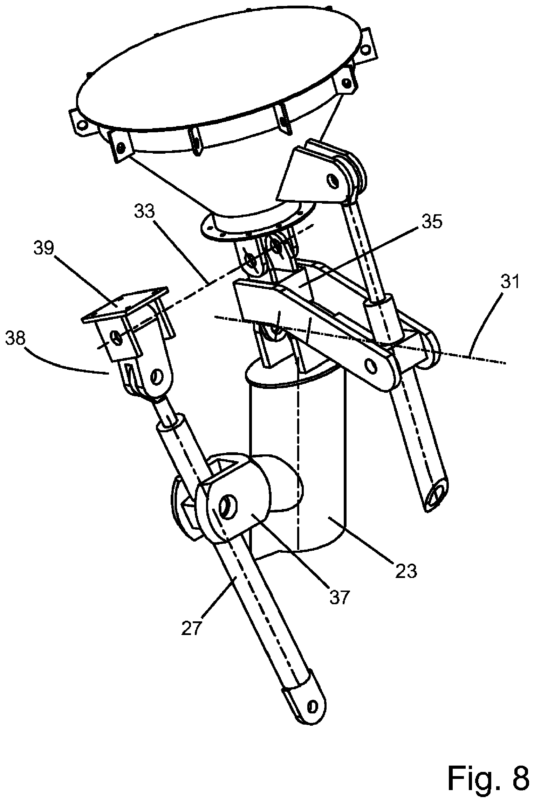

Bei diesem Ausführungsbeispiel ist orthogonal zu der ersten Drehachse an dem Gelenk 25 eine zweite Drehachse 33 ausgebildet. Diese zweite Drehachse 33 ist in der Figur 8 gut zu erkennen. Wie man aus den Figuren 7 und 8 gut erkennen kann, umfasst das Gelenk 25 ein Zwischenstück 35, an dessen unteren Ende eine Lagergasse für die erste Drehachse 31 ausgebildet ist und an dessen oberen Ende eine Lagergasse für die zweite Drehachse 33 ausgebildet ist. An dem Zwischenstück 35 ist ein Ausleger 36 angeordnet, der als Widerlager für den zweiten Linearantrieb 29 dient. Es sind auch andere Ausführungen möglich bei denen die erste Drehachse nicht orthogonal - zum Beispiel zwischen 60° und 90° -

zu der zweiten Drehachse 33 verläuft.

Das andere Ende des zweiten Linearantriebs 29 ist an dem Anlenkpunkt 15 der Nabe 3 gelenkig befestigt. Durch Ansteuern des zweiten Linearantriebs 29 ist es also möglich, die Nabe 3 um die zweite Drehachse 33 relativ zu dem Zwischenteil 35 beziehungsweise relativ zu dem Pylon 23 zu verschwenken. Auch hierbei ist ein Verstellwinkel von unter 110 Grad ausreichend.

An dem Pylon 23 ist ein Befestigungspunkt 37 für das eine Ende des ersten Linearantriebs 27 vorgesehen. Auch hier muss der Linearantrieb 27 gelenkig mit dem Befestigungspunkt 37 verbunden sein. Besonders deutlich wird dies auch am oberen Ende des ersten Antriebs 27. Dort ist ein Gelenk mit zwei Freiheitsgraden angeordnet, dessen Befestigungsplatte 39 mit einem der Tragarme 7 der Tragstruktur (siehe Figur 1) verschraubt wird. Das Gelenk am oberen Ende des ersten Linearantriebs hat das Bezugszeichen 38. Bei diesem Ausführungsbeispiel verläuft die in Figur 8 obere Drehachse des Gelenks 38 koaxial zu der zweiten Drehachse 33 des Gelenks 25 zwischen Nabe 3 und Pylon 23. Dadurch werden Verspannungen der Gelenke 25 und 38 vermieden.

Selbstverständlich wäre es auch möglich, anstelle dieses Gelenks 38 ein Kugelgelenk oder ein anderes Gelenk mit zwei Freitheitsgraden vorzusehen.

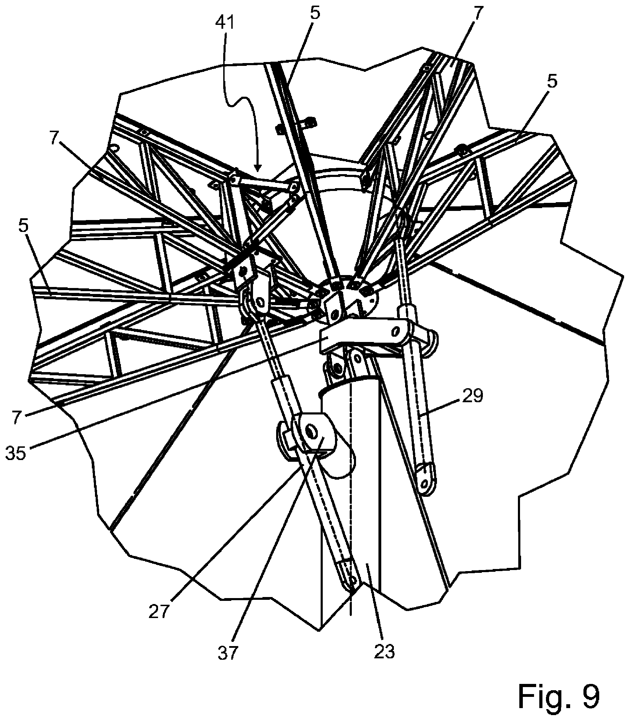

In der Figur 9 ist nun ein Ausschnitt eines erfindungsgemäßen Heliostaten in einer isometrischen Ansicht von unten dargestellt. Aus Gründen der Übersichtlichkeit sind etliche Bezugszeichen nicht eingetragen. Dabei wird die Befestigung der Tragarme 5 und 7 an der Nabe 3 deutlich. Außerdem wird deutlich, wie der erste Linearantrieb mit einem Tragarm 7 verschraubt ist. Dieser Tragarm 7 hat die gleichen äußeren Abmessungen wie die übrigen Tragarme 7, allerdings ist der wegen der größeren auftretenden Belastungen mit einer größeren Wandstärke ausgebildet, sodass er steifer ist.

Darüber hinaus werden die von der Befestigungsplatte des Gelenks 38 eingeleiteten Kräfte über einen Dreiecksverbund 41 an die benachbarten Tragarme 5 beziehungsweise die Nabe 3 abgeleitet.

Die erfindungsgemäße radialsymmetrische Tragstruktur ist sehr leicht und trotzdem steif. Aufgrund der Neigung der ersten Drehachse 31 relativ zur Horizontalen kann der Stellweg des Gelenks 25 um die erste Drehachse 31 auf Werte unter 110 Grad beschränkt werden. Auch der Stellweg des Gelenks 25 um die zweite Drehachse 33 kann auf Werte unter 110 Grad beschränkt werden, was den Einsatz kostengünstiger und trotzdem leistungsfähiger Linearantriebe 27 und 29 bei ausreichend genauer Positionierung der Spiegelfläche 1 ermöglicht.

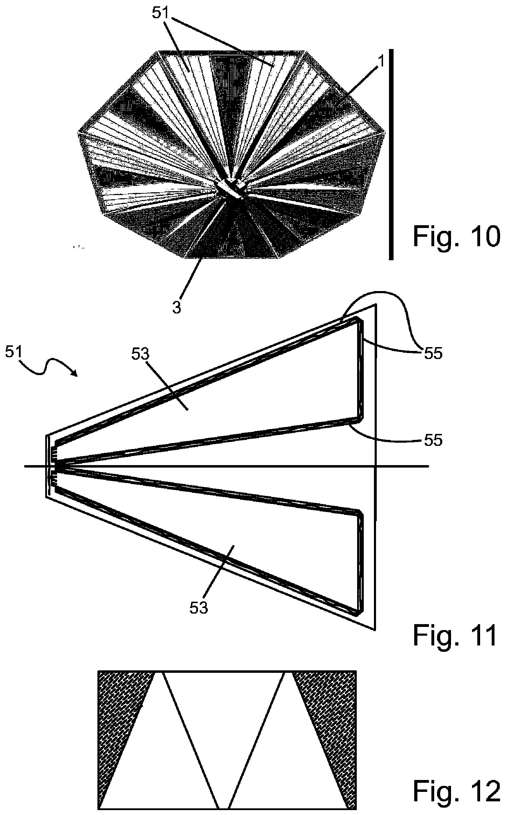

In den Figuren 10 bis 14 wird ein zweites Ausführungsbeispiel eines erfindungsgemäßen Heliostaten in verschiedenen Ansichten dargestellt. Dabei sind die Tragarme 51 als Blech aus einem Blechzuschnitt durch Umformen, insbesondere Tiefziehen hergestellt. Die Spiegelfläche 1 ist bei diesem Ausführungsbeispiel als Achteck ausgebildet, wobei dieses Ausführungsbeispiel nicht auf achteckige Spiegelflächen beschränkt ist, sondern auch bei anderen polygonalen Spiegelflächen 1 einsetzbar ist.

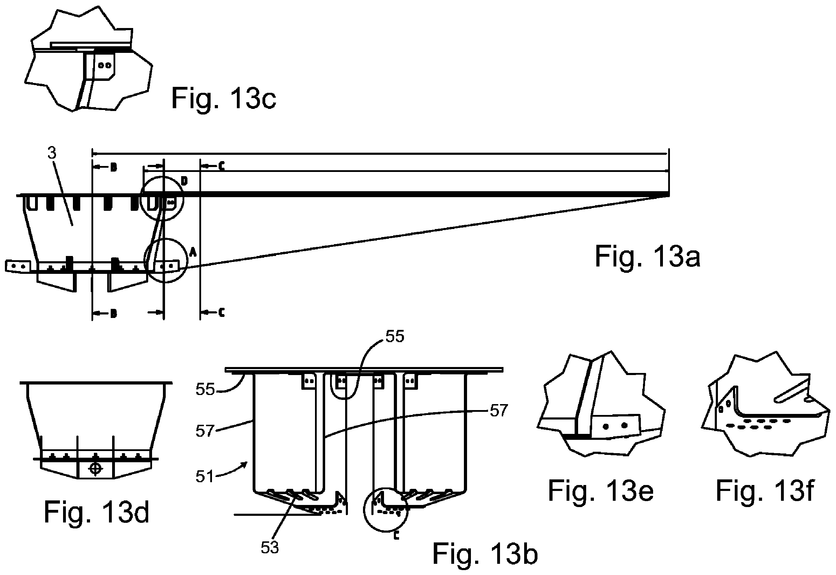

Wie man aus der Figur 10, die eine isometrische Ansicht von unten auf die Tragstruktur und die Spiegelfläche 1 zeigt, und Figur 13 erkennen kann, sind auch bei diesem Ausführungsbeispiel die Tragarme 51 an einer Nabe 3 befestigt. Aus der Figur 13 b) ist zu erkennen, dass die Tragarme 51 im Prinzip immer einen ähnlichen, nämlich einen U-förmigen Querschnitt aufweisen, mit zwei parallelen Schenkeln 57 und einem die beiden Schenkel 57 verbindenden Steg 53.

Der Steg 53 ist gewissermaßen die Unterseite des Tragarms 51 und daher in der Figur 10, aber auch in der Figur 11 besonders gut sichtbar. In der nähe der Nabe 3 ist der U-förmige Querschnitt schmal und die Schenkel sind entsprechend hoch. Mit zunehmendem Abstand von der Nabe wird der U-förmige Querschnitt breiter und die Schenkel weniger hoch. Dadurch ergibt sich eine den auftretenden Biegemomenten entsprechende Steifigkeit der Tragarme 51. Gleichzeitig wird die Länge de Klebelinie zwischen dem Tragarm 51 und der Spiegelfläche 1 maximiert.

In der Figur 11 ist eine Ansicht von unten auf ein Segment einer Spiegelfläche mit zwei aufgeklebten Tragarmen 51 dargestellt. Die Tragarme 51 sind an ihrem der Spiegelfläche zugewandten Ende abgekantet (siehe das Bezugszeichen 55 in den Figuren 11 und 13 b)), sodass sich eine lange Klebelinie zwischen den Tragarmen 51 und dem Segment der Spiegelfläche 1 ergibt. Bei der Verklebung zwischen den Tragarmen 53 und der Spiegelfläche kann auf Fügetechniken aus dem Automobilbau zurückgegriffen werden. Dabei ergibt sich ein torsionsteifer Kasten mit rechteckigem Querschnitt. Drei Seiten (57 und 53) dieses rechteckigen Querschnitts werden von den Tragarmen 51 gebildet, die vierte Seite wird von der Spiegelfläche, also einem Flachglas, gebildet.

In der Figur 12 ist der Zuschnitt der Segmente der Spiegelfläche 1 aus einem handelsüblichen Flachglas angedeutet.

Bei diesem Ausführungsbeispiel werden erst die Tragarme 51 mit der Nabe 3 verbunden und dann die Segmente der Spiegelfläche 1 mit den Tragarmen verklebt oder auf andere Weise verbunden.

Dadurch ergeben sich gewisse Restriktionen hinsichtlich der Zugänglichkeit von Werkzeugen und es hat sich, auch wegen der relativ geringen Dicke des Blechs aus dem die Tragarme 51 sind (etwa 1 mm), als vorteilhaft erwiesen, die Tragarme 51 mit der Nabe 3 durch Blindniete zu verbinden. Die konstruktiven Details dieser Verbindung sind in den verschiedenen Ansichten der Figur 13 dargestellt.

In der Figur 13 b) ist der U-förmige Querschnitt der Tragarme mit den angesetzten Abkantungen 55 gut zu erkennen. Die beiden parallelen Schenkel des U-förmigen Querschnitts sind in der Figur 13 b) mit dem Bezugszeichen 57 versehen.

Damit die Tragarme 51 direkt, d. h. ohne Änderungen des Querschnitts oder dergleichen mit der Nabe 3 verbunden werden können, ist die Nabe 3 an ihrem oberen Ende und an ihrem unterem Ende mit entsprechenden Kontaktstellen ausgebildet, die sowohl senkrechte Laschen 59 als auch Kontaktflächen für die Abkantungen 55 und den Steg 53 der Tragarme 51 umfassen.

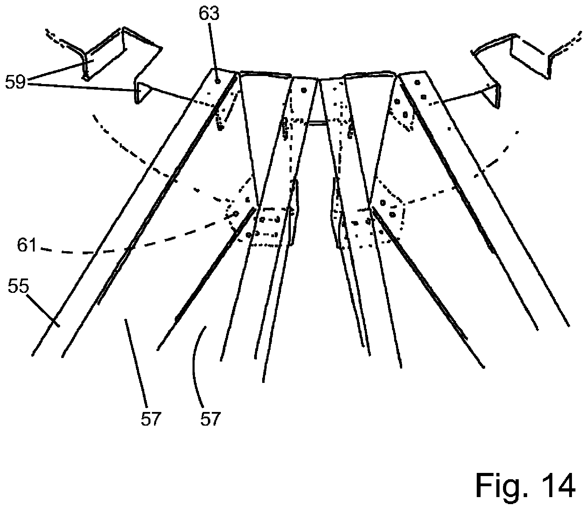

In der Figur 14 ist die Nabe 3 illustriert. Dabei wird deutlich, dass an dem oberen Ende der Nabe 3 besagte Laschen 59 durch Abkanten aus einer Flanschplatte hergestellt werden können. In entsprechender Weise werden aus einer Flanschplatte am unteren Ende der Nabe 3 Laschen 61 nach oben abgekantet, sodass sich in der Summe eine große Kontaktfläche zwischen der Nabe 3 und jedem einzelnen Tragarm 51 ergeben.

Um dies zu veranschaulichen sind die Blindniete für zwei Tragarme 51 eingetragen. Exemplarisch ist in der Figur 14 eine Blindniete 63 mit einem Bezugszeichen versehen. Daraus ergibt sich, dass eine flächige und damit sehr belastbare Verbindung zwischen Nabe 3 und Tragarm 51 über die Abkantung 55, die Schenkel 57 und den Steg 53 möglich ist. Dadurch wird eine sehr steife Verbindung erreicht.

Durch die selbsttragende Struktur dieser aus dünnem Blech gefertigten Tragarme 51 in Verbindung mit dem Segment der Spiegelfläche 1 lassen sich bei diesem Ausführungsbeispiel weitere Gewichtsvorteile gegenüber herkömmlichen Heliostaten realisieren.

Auch bei diesem Ausführungsbeispiel werden die Einzelteile, nämlich Nabe 3, Tragarme 51 und die zugeschnittenen Segmente der Spiegelfläche 1 auf der Baustelle angeliefert und dort in entsprechenden Montagevorrichtungen hergestellt.

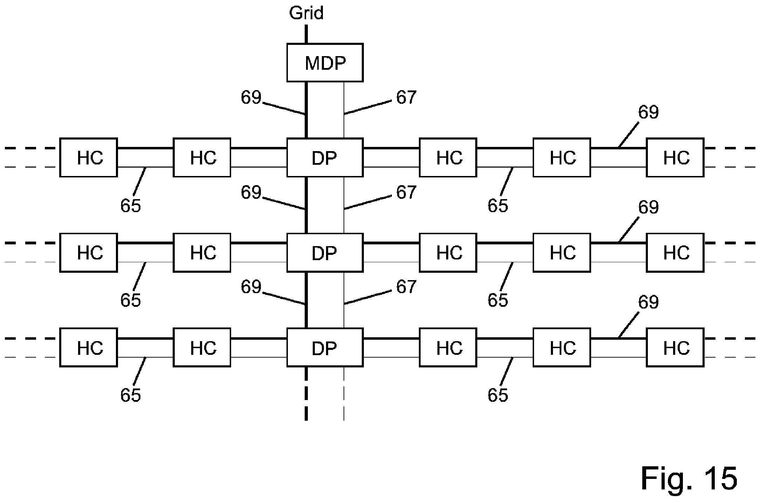

In der Figur 15 ist sehr vereinfacht die Netz- und Kommunikationsstruktur eines erfindungsgemäßen Felds von Heliostaten dargestellt.

Dabei gibt es gewissermaßen drei Gruppen von Steuergeräten/Leitwarten. Die dezentralen Steuergeräte sind mit HC, als Abkürzung für Heliostat Control box gekennzeichnet. Ein solches Steuergerät HC versorgt beziehungsweise steuert eine Gruppe von Heliostaten und versorgt die Linearantrieb 27, 29 mit der erforderlichen elektrischen Energie. Zu diesem Zweck sind jedem Steuergerät HC eine Photovoltaikeinheit und ein Pufferspeicher für elektrische Energie zugeordnet (nicht dargestellt).

Wenn auf diese Weise die zum Betrieb des Steuergeräts HC und zum Ansteuern der Antriebe 27, 29 mehrerer Heliostaten erforderliche Energie gruppenweise durch eine Photovoltaikeinheit erzeugt wird und in einem Pufferspeicher gespeichert wird, ergeben sich erhebliche wirtschaftliche Vorteile. Entsprechendes gilt auch für den Einsatz eines Steuergeräts HC für mehrere Heliostaten. Dann nämlich wird die Rechenleistung dieses einen Steuergeräts HC besser ausgenutzt. Die verschiedenen Steuergeräte HC sind über einen Feldbus, angedeutet durch die Linie 65 miteinander und mit einem Verteiler DP (=Distribution Panel) verbunden.

Die Verteiler DP wiederum sind untereinander und mit einer Leitwarte MDP (= Main Distribution Panel) verbunden. Dazu wird eine ethernet-Verbindung 67 eingesetzt.

Wenn die Steuergeräte HC nicht über eine Photovoltaikeinheit mit elektrischer Energie versorgt werden sollen, dann ist es auch möglich, eine elektrische Versorgungsleitungen 69 ausgehend von der Leitwarte MDP über die Verteiler DP zu den einzelnen Steuergeräten HC zu legen.

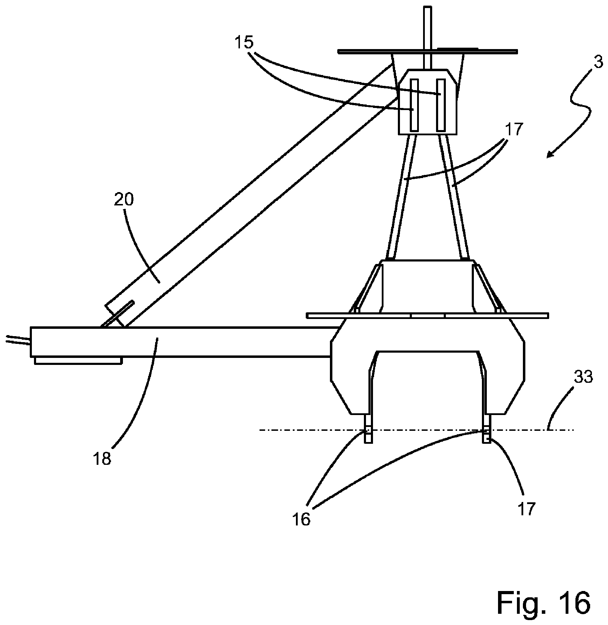

In der Figur 16 ist ein weiteres Ausführungsbeispiel einer Nabe 3 in einer Seitenansicht dargestellt. Bei diesem Ausführungsbeispiel ist die Nabe 3 als in Bezug auf Steifigkeit, Gewicht und Herstellungskosten optimierte Schweißkonstruktion ausgebildet.

Bei diesem Ausführungsbeispiel werden die Tragarme 5 und 7 (siehe Figur 1) an zwei Flanschen 13 und 14 der Nabe 3 befestigt. Der in Einbaulage untere Flansch 13 hat bei diesem Ausführungsbeispiel einen größeren Außendurchmesser und Lochkreisdurchmesser als der in Einbaulage obere Flansch 14.

Die Laschen 17 erstrecken sich durch den Flansch 13 hindurch bis zum "oberen" Flansch 14 und sind mit diesen zum Beispiel durch Schweißen fest verbunden.

An dem unteren Ende der Laschen 17 sind, wie auch bei dem Ausführungsbeispiel gemäß Figur 3, Bohrungen 16 ausgebildet, die ein Teil der ersten Drehachse 31 bilden (siehe Figur 8). Um ein möglichst steifes Lager zu erhalten, ist der Abstand zwischen den Laschen 17 im Bereich der Bohrungen 16 relativ groß.

Den während des Betriebs auftretenden Belastungen entsprechend nähern sich die Laschen 17 in Richtung des Flansches 14 an.

An den Laschen 17 und dem Flansch 14 ist der Anlenkpunkt 15 (ebenfalls in Form zweier (Blech-)Laschen) befestigt, zum Beispiel durch Schweißen.

Parallel zur ersten Drehachse 31 und zwischen den Bohrungen 16 und der Flansch 14 ist ein Ausleger 18 angeordnet, der als Befestigungspunkt für den ersten Linearantrieb 27 (siehe Figur 7b) dient.

Dadurch werden die zwischen Spiegelfläche 1 und Pylon 23 wirkenden Kräfte von den Tragarmen 5, 7 in die Nabe eingeleitet und dann über den Ausleger 18 auf den Linearantrieb übertragen. Dadurch werden alle Tragarme 5, 7 gleichmäßig belastet, so dass alle Tragarme 5, 7 gleich dimensioniert werden könne. Das erleichtert die Serienfertigung und die Montage vor Ort. Der Ausleger 18 ist durch eine Strebe 20 zum Flansch 14 hin abgestützt.

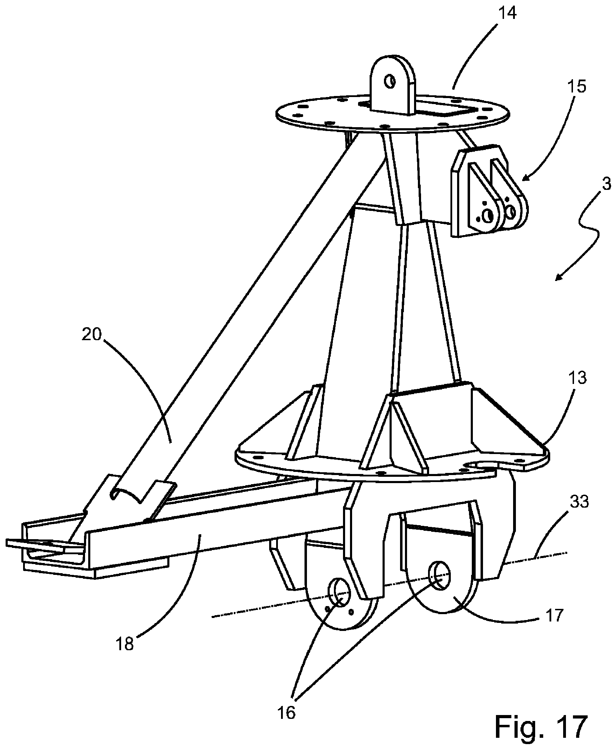

In der Figur 17 ist dieses Ausführungsbeispiel einer Nabe 3 in einer Isometrie dargestellt.

Im Bereich der Flansche 13 und 14 sowie der Laschen 17 sind zur weiteren Aussteifung noch Knotenbleche und U-förmige Aussteifungselemente vorgesehen. Unter anderem dadurch ist Dieses Ausführungsbeispiel einer Nabe 3 ist extrem steif und leicht. Es lässt sich aus ebenen Blechzuschnitten einfach herstellen.

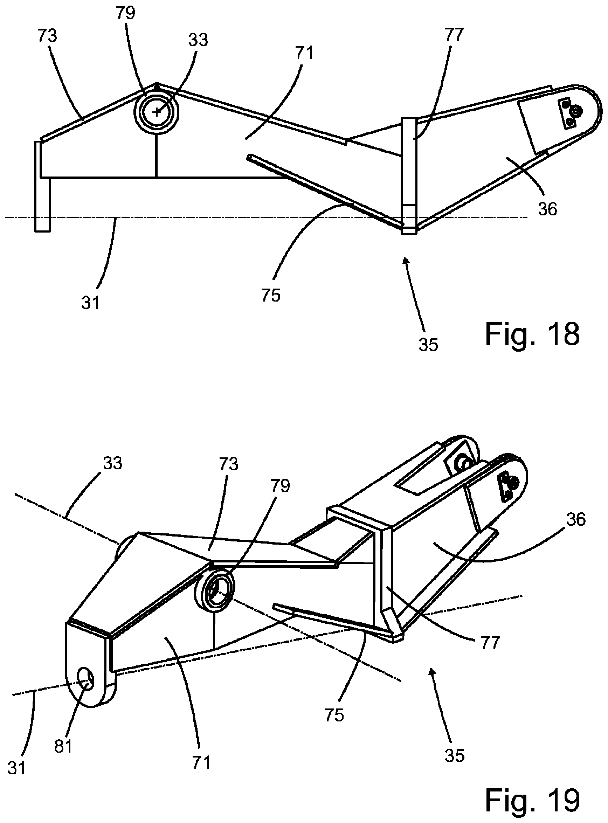

In der Figur 18 ist ein "bumerangartiges" Zwischenstück 35 in einer Seitenansicht dargestellt. Es hat die Funktion des in der Figur 8 dargestellten Zwischenstücks ist jedoch auf die Nabe 3 gemäß Figuren 16 und 17 abgestimmt. Auch hierbei handelt es sich um eine gewichtsoptimierte Schweißkonstruktion, die aus Blechzuschnitten hergestellt werden kann.

In den Figuren 18 und 19 sind die erste Drehachse 31 und die zweite Drehachse 33 eingetragen.

Das Zwischenstück 35 besteht aus fünf Haupt-Bauelementen:

Zwei Seitenteilen 71, einem ersten Verbindungsteil 73, einem zweiten Verbindungteil 75 und einem Spant 77

Im Bereich der zweiten Drehachse 33 hat das Zwischenstück 35 einen U-förmigen Querschnitt, der durch die Seitenteile 71 und das erste Verbindungsteil 73 gebildet wird. Um einen nicht dargestellten Lagerbolzen aufzunehmen, ist im Bereich der zweiten Drehachse 33 eine Hülse 79 eingeschweißt. Die Hülse 79 und die Bohrungen 16 in der Nabe 3 bilden zusammen mit einem Lagerbolzen (nicht dargestellt) ein Lager, das die Beweglichkeit der Konstruktion um die zweite Drehachse 33 ermöglicht.

An dem in Figur 18 linken Ende des Zwischenstücks 35 und in dem Spant 77 sind Bohrungen 81 (nicht sichtbar im Spant 77) ausgebildet, welche die erste Drehachse 31 definieren. Weil diese Lagerung sehr große Lasten aufnehmen muss, ist der Abstand zwischen den Bohrungen 81 relativ groß. Demensprechend muss das Gegenstück (nicht dargestellt) am oberen Ende des Pylons 23 dimensioniert werden.

Die Buchse 79 und die Bohrungen 81 sind Teile der Lagergassen.

An dem in Figur 18 rechten Ende des Zwischenstücks 35 ist der Ausleger 36 ausgebildet. Weil zwischen der Buchse 79 und dem Ende des Auslegers 36 sehr hohe Beanspruchungen, unter anderem auch Torsionslasten auf das Zwischenstück 35 einwirken, ist in diesem Bereich zusätzlich zu dem ersten Verbindungsteil 73 noch ein zweites Verbindungsteil 75 vorgesehen. Dadurch ergibt sich ein geschlossenes Querschnittsprofil in Form eines Rechtecks.

Der Ausleger 36 bildet eine Aufnahme/einen Fixpunkt für zweiten Linearantrieb 29.

## Patentansprüche

1. Heliostat für ein Solarkraftwerk mit einem zentralen Receiver, wobei der Heliostat:
- eine axialsymmetrische Spiegelfläche (1) mit mindestens fünf Ecken,
- einen Pylon (23),
- eine relativ zu dem Pylon (23) drehbar und/oder schwenkbare Tragstruktur für die Spiegelfläche (1), und
- mindestens zwei Stellantriebe (27, 29) umfasst;
wobei die Tragstruktur eine Nabe (3), mehrere mit der Nabe (3) verbundene Tragarme (5, 7, 9, 51), und ein Gelenk (25) aufweist,
wobei das Gelenk (25) zwei Drehachsen (31, 33) aufweist, um die Nabe (3) und der Pylon (23) miteinander zu koppeln,
wobei eine erste Drehachse (31) des Gelenks (25) eine am Pylon (23) befestigt erste Drehachse (31) ist, die einen ersten Winkel (alpha) größer 0° mit einer horizontalen Ebene einschließt;
**dadurch gekennzeichnet, dass** zwischen dem Pylon (23) und der Tragstruktur ein erster Linearantrieb (27) vorgesehen ist; dass das Gelenk (25) ein Zwischenstück (35) umfasst, das eine erste und eine zweite Lagergasse aufweist für die Drehachsen (31, 33), wobei die erste und die zweite Lagergasse voneinander beabstandet sind und in verschiedenen Ebenen liegen; dass zwischen dem ersten Linearantrieb (27) und der Tragstruktur ein Gelenk (38) mit zwei Freiheitsgraden angeordnet ist, und dass eine Drehachse (38) des Gelenks (38) koaxial zu der zweiten Drehachse (33) des Gelenks (25) zwischen Nabe (3) und Pylon (23) ist.

2. Heliostat nach Anspruch 1, **dadurch gekennzeichnet, dass** die Spiegelfläche (1) aus mehreren näherungsweise dreieckigen Segmenten besteht.

3. Heliostat nach einem der vorgehenden Ansprüche, **dadurch gekennzeichnet, dass** eine erste Gruppe von Tragarmen (5) die Nabe (3) mit den Ecken der Spiegelfläche (1) verbindet.

4. Heliostat nach Anspruch 3, **dadurch gekennzeichnet, dass** eine zweite Gruppe von Tragarmen (7) in der Winkelhalbierenden zwischen zwei benachbarten Tragarmen (5) der ersten Gruppe angeordnet ist.

5. Heliostat nach einem der vorhergehenden Ansprüche, **dadurch gekennzeichnet, dass** eine zweite Drehachse (33) des Gelenks (25) orthogonal zu der ersten Drehachse (31) verläuft.

6. Heliostat nach einem der Ansprüche 1 bis 4, **dadurch gekennzeichnet, dass** die zweite Drehachse (33) und die erste Drehachse (31) des Gelenks (25) einen Winkel kleiner 90° und größer 60° einschließen.

7. Heliostat nach einem der vorhergehenden Ansprüche, **dadurch gekennzeichnet, dass** die erste und die zweite Lagergasse voneinander beabstandet sind und rechtwinklig zueinander verlaufen.

8. Heliostat nach einem der vorhergehenden Ansprüche, **dadurch gekennzeichnet, dass** das ein zweiter Linearantrieb (29) zwischen der Nabe (3) und dem Zwischenstück (35) vorgesehen ist.

9. Heliostat nach einem der vorgehenden Ansprüche, **dadurch gekennzeichnet, dass** der erste und/oder der zweite Linearantrieb (27, 29) einen Verstellwinkel von mehr als 100°, bevorzugt von mehr als 110°, ermöglichen.

10. Heliostat nach einem der vorhergehenden Ansprüche, **dadurch gekennzeichnet, dass** die Tragarme (5, 7) als Fachwerk ausgebildet sind, und dass die Segmente der Spiegelfläche (1) direkt oder mittelbar, insbesondere über Pfetten (9) und einstellbare Befestigungselemente (21) mit einem oder zwei Tragarmen (5, 7, 51) verbunden sind.

11. Heliostat nach einem der Ansprüche 1 bis 10, **dadurch gekennzeichnet, dass** die Tragarme (51) aus einem Blechzuschnitt durch Umformen, insbesondere Tiefziehen, hergestellt sind, dass die Segmente der Spiegelfläche (1) punktuell oder linienförmig mit einem oder zwei Tragarmen (5, 7, 51) verklebt sind.

12. Heliostat nach einem der vorhergehenden Ansprüche, **dadurch gekennzeichnet, dass** die Nabe (3) als kegelstumpfförmiger Körper umfassend ein Ende mit einem größerem Durchmesser und ein Ende mit einem kleineren Durchmesser ausgebildet ist, dass an dem Ende mit größerem Durchmesser mehrere radial angeordnete Befestigungslaschen (11, 59) vorgesehen sind, und dass das Ende mit kleinerem Durchmesser als Befestigungsflansch (13) und optional mit radial angeordneten Befestigungslaschen (61) ausgebildet ist.

13. Heliostat nach einem der Ansprüche 1 bis 12, **dadurch gekennzeichnet, dass** die Nabe (3) zwei Befestigungsflansche (13, 14) aufweist, und dass an der Nabe (3) ein Ausleger (18) vorgesehen ist, der mit dem ersten Linearantrieb (27) zusammenwirkt.

14. Heliostat nach einem der Ansprüche 12 oder 13, **dadurch gekennzeichnet, dass** die Nabe (3) aus Blechzuschnitten zusammengesetzt ist.

15. Heliosstat nach einem der Ansprüche 9 bis 14 **dadurch gekennzeichnet, dass** das Zwischenstück (35) zwei Seitenteile (71), ein erstes Verbindungsteil (73), ein zweites Verbindungsteil (75) und/oder einen Spant (77) umfasst.

16. Solarkraftwerk umfassend einen Receiver und eine Vielzahl von Heliostaten nach einem der vorhergehenden Ansprüche, wobei die Heliostaten elektrische Verstellantriebe aufweisen, **dadurch gekennzeichnet, dass** mehreren Heliostaten eine Photovoltaik-Einheit, einen Pufferspeicher für elektrische Energie und ein Steuergerät (HC) zugeordnet ist.

17. Solarkraftwerk nach Anspruch 16, **dadurch gekennzeichnet, dass** mehrere Gruppen von baugleichen Heliostaten um den Receiver angeordnet sind.

18. Solarkraftwerk nach einem der Ansprüche 16 oder 17, **dadurch gekennzeichnet, dass** die Heliostaten der verschiedenen Gruppen sich bezüglich des Winkels (alpha) zwischen der ersten Drehachse (31) und der Horizontalen unterscheiden.

## Claims

1. A heliostat for a solar power plant comprising a central receiver, wherein the heliostat comprises:
- an axisymmetric mirror surface (1) comprising at least five corners,
- a pylon (23),
- a support structure for the mirror surface (1) rotatable and/or pivotable relative to the pylon (23), and
- at least two actuator drives (27, 29);
wherein the support structure has a hub (3), a plurality of support arms (5, 7, 9, 51) connected to the hub (3), and a joint (25),
wherein the joint (25) has two axes of rotation (31, 33) to couple the hub (3) and the pylon (23) to one another,
wherein a first axis of rotation (31) of the joint (25) is a first axis of rotation (31) fastened to the pylon (23), which forms a first angle (alpha) greater than 0° with a horizontal plane;
**characterized in that** between the pylon (23) and the support structure a first linear drive (27) is provided; **in that** the joint (25) comprises an intermediate piece (35), which has a first and a second bearing channel for the axes of rotation (31, 33), wherein the first and the second bearing channels are spaced apart from one another and lie in different planes;
**in that** between the first linear drive (27) and the support structure is arranged a joint (38) with two degrees of freedom and **in that** an axis of rotation (38) of the joint (38) is coaxial to the second axis of rotation (33) of the joint (25) between hub (3) and pylon (23).

2. The heliostat according to claim 1, **characterized in that** the mirror surface (1) consists of a plurality of approximately triangular segments.

3. The heliostat according to any one of the preceding claims, **characterized in that** a first group of support arms (5) connects the hub (3) to the corners of the mirror surface (1).

4. The heliostat according to claim 3, **characterized in that** a second group of support arms (7) is arranged in the bisector between two adjacent support arms (5) of the first group.

5. The heliostat according to any one of the preceding claims, **characterized in that** a second axis of rotation (33) of the joint (25) runs orthogonally to the first axis of rotation (31).

6. The heliostat according to any one of claims 1 to 4, **characterized in that** the second axis of rotation (33) and the first axis of rotation (31) of the joint (25) form an angle smaller than 90° and greater than 60°.

7. The heliostat according to any one of the preceding claims, **characterized in that** the first and the second bearing channels are spaced apart from one another and run at right angles to one another.

8. The heliostat according to any one of the preceding claims, **characterized in that** the one second linear drive (29) is provided between the hub (3) and the intermediate piece (35).

9. The heliostat according to any one of the preceding claims, **characterized in that** the first and/or the second linear drive (27, 29) allow/s an adjustment angle of more than 100°, preferably of more than 110°.

10. The heliostat according to any one of the preceding claims, **characterized in that** the support arms (5, 7) are formed as a framework and **in that** the segments of the mirror surface (1) are directly or indirectly connected to one or two support arms (5, 7, 51), in particular via purlins (9) and adjustable fastening elements (21).

11. The heliostat according to any one of claims 1 to 10, **characterized in that** the support arms (51) are manufactured from a sheet blank by deforming, in particular deep drawing, **in that** the segments of the mirror surface (1) are adhered to one or two support arms (5, 7, 51) point by point or linearly.

12. The heliostat according to any one of the preceding claims, **characterized in that** the hub (3) is formed as a conical body comprising one end with a larger diameter and one end with a smaller diameter, **in that** at the end with the larger diameter a plurality of radially arranged fastening straps (11, 59) is provided and **in that** the end with the smaller diameter is formed as a fastening flange (13) and optionally with radially arranged fastening straps (61).

13. The heliostat according to any one of claims 1 to 12, **characterized in that** the hub (3) has two fastening flanges (13, 14) and **in that** an extension (18) is provided on the hub (3) which cooperates with the first linear drive (27).

14. The heliostat according to any one of claims 12 or 13, **characterized in that** the hub (3) is composed of sheet blanks.

15. The heliostat according to any one of claims 9 to 14, **characterized in that** the intermediate piece (35) has two side parts (71), a first connection part (73), a second connection part (75) and/or a frame (77).

16. A solar power plant comprising a receiver and a multiplicity of heliostats according to any one of the preceding claims, wherein the heliostats have electric adjustment drives, **characterized in that** a photovoltaic unit, a buffer for electric energy and a control device (HC) are assigned to a plurality of heliostats.

17. The solar power plant according to claim 16, **characterized in that** a plurality of groups of structurally-identical heliostats are arranged around the receiver.

18. The solar power plant according to any one of claims 16 or 17, **characterized in that** the heliostats of the different groups are different in relation to the angle (alpha) between the first axis of rotation (31) and the horizontal.

## Revendications

1. Héliostat pour une centrale solaire comprenant un récepteur central, dans lequel l'héliostat comprend :
- une surface de miroir axisymétrique (1) comprenant au moins cinq coins,
- un pylône (23),
- une structure de support pour la surface de miroir (1) rotative et/ou pivotable par rapport au pylône (23), et
- au moins deux systèmes d'entraînement à actionneurs (27, 29) ;
dans lequel la structure de support a un moyeu (3), une pluralité de bras de support (5, 7, 9, 51) raccordés au moyeu (3), et une articulation (25),
dans lequel l'articulation (25) a deux axes de rotation (31, 33) pour coupler le moyeu (3) et le pylône (23) l'un à l'autre,
dans lequel un premier axe de rotation (31) de l'articulation (25) est un premier axe de rotation (31) fixé au pylône (23), qui forme un premier angle (alpha) supérieur à 0° avec un plan horizontal ;
**caractérisé en ce qu'**un premier système d'entraînement linéaire (27) est prévu entre le pylône (23) et la structure de support ; **en ce que** l'articulation (25) comprend une pièce intermédiaire (35), qui a un premier et un deuxième canal de palier pour les axes de rotation (31, 33), dans lequel les premier et deuxième canaux de palier sont espacés l'un de l'autre et reposent sur différents plans ;
**en ce qu'**une articulation (38) à deux degrés de liberté est disposée entre le premier système d'entraînement linéaire (27) et la structure de support et **en ce qu'**un axe de rotation (38) de l'articulation (38) est coaxial au deuxième axe de rotation (33) de l'articulation (25) entre le moyeu (3) et le pylône (23).

2. Héliostat selon la revendication 1, **caractérisé en ce que** la surface de miroir (1) est constituée d'une pluralité de segments approximativement triangulaires.

3. Héliostat selon l'une quelconque des revendications précédentes, **caractérisé en ce qu'**un premier groupe de bras de support (5) raccorde le moyeu (3) aux coins de la surface de miroir (1).

4. Héliostat selon la revendication 3, **caractérisé en ce qu'**un deuxième groupe de bras de support (7) est disposé dans la bissectrice entre deux bras de support (5) adjacents du premier groupe.

5. Héliostat selon l'une quelconque des revendications précédentes, **caractérisé en ce qu'**un deuxième axe de rotation (33) de l'articulation (25) s'étend orthogonalement au premier axe de rotation (31).

6. Héliostat selon l'une quelconque des revendications 1 à 4, **caractérisé en ce que** le deuxième axe de rotation (33) et le premier axe de rotation (31) de l'articulation (25) forment un angle inférieur à 90° et supérieur à 60°.

7. Héliostat selon l'une quelconque des revendications précédentes, **caractérisé en ce que** les premier et deuxième canaux de palier sont espacés l'un de l'autre et s'étendent aux angles droits l'un par rapport à l'autre.

8. Héliostat selon l'une quelconque des revendications précédentes, **caractérisé en ce que** le deuxième système d'entraînement linéaire (29) est prévue entre le moyeu (3) et la pièce intermédiaire (35).

9. Héliostat selon l'une quelconque des revendications précédentes, **caractérisé en ce que** la première et/ou la deuxième commande linéaire (27, 29) autorise/autorisent un angle de réglage de plus de 100°, de préférence de plus de 110°.

10. Héliostat selon l'une quelconque des revendications précédentes, **caractérisé en ce que** les bras de support (5, 7) sont formés comme une structure et **en ce que** les segments de la surface de miroir (1) sont directement ou indirectement raccordés à un ou deux bras de support (5, 7, 51), notamment moyennant des pannes (9) et des éléments de fixation réglables (21).

11. Héliostat selon l'une quelconque des revendications 1 à 10, **caractérisé en ce que** les bras de support (51) sont fabriqués à partir d'un flan de tôle par déformation, en particulier par emboutissage profond, **en ce que** les segments de la surface de miroir (1) sont adhérés à un ou deux bras de support (5, 7, 51) point par point ou linéairement.

12. Héliostat selon l'une quelconque des revendications précédentes, **caractérisé en ce que** le moyeu (3) est formé comme un corps conique comprenant une extrémité avec un plus grand diamètre et une extrémité avec un plus petit diamètre, **en ce qu'**une pluralité de sangles de fixation (11, 59) disposées radialement est prévue à l'extrémité avec le plus grand diamètre et **en ce que** l'extrémité avec le plus petit diamètre est formée comme une bride de fixation (13) et éventuellement avec des sangles de fixation (61) disposées radialement.

13. Héliostat selon l'une quelconque des revendications 1 à 12, **caractérisé en ce que** le moyeu (3) a deux brides de fixation (13, 14) et **en ce qu'**une extension (18) est prévue sur le moyeu (3) qui coopère avec le premier système d'entraînement linéaire (27).

14. Héliostat selon l'une quelconque des revendications 12 ou 13, **caractérisé en ce que** le moyeu (3) est composé de flans de tôle.

15. Héliostat selon l'une quelconque des revendications 9 à 14, **caractérisé en ce que** la pièce intermédiaire (35) a deux parties latérales (71), une première partie de raccordement (73), une deuxième partie de raccordement (75) et/ou un cadre (77).

16. Centrale solaire comprenant un récepteur et une multiplicité d'héliostats selon l'une quelconque des revendications précédentes, dans lequel les héliostats ont des systèmes d'entraînement électriques de réglage, **caractérisée en ce qu'**une unité photovoltaïque, un tampon pour l'énergie électrique et un dispositif de contrôle (HC) sont affectés à une pluralité d'héliostats.

17. Centrale solaire selon la revendication 16, **caractérisée en ce qu'**une pluralité de groupes d'héliostats structurellement identiques sont disposés autour du récepteur.

18. Centrale solaire selon l'une quelconque des revendications 16 ou 17, **caractérisée en ce que** les héliostats des différents groupes sont différents par rapport à l'angle (alpha) entre le premier axe de rotation (31) et l'horizontale.
